(19) Europäisches Patentamt
European Patent Office
Office européen des brevets

(11) **EP 2 619 495 B1**

(12) **EUROPEAN PATENT SPECIFICATION**

(45) Date of publication and mention
of the grant of the patent:
**05.11.2014 Bulletin 2014/45**

(21) Application number: **11797344.6**

(22) Date of filing: **22.09.2011**

(51) Int Cl.:
***F16L 11/04*** *(2006.01)*    ***F16L 53/00*** *(2006.01)*

(86) International application number:
**PCT/IB2011/054181**

(87) International publication number:
**WO 2012/038925 (29.03.2012 Gazette 2012/13)**

(54) **PIPING FOR AN SCR CIRCUIT OF A MOTOR VEHICLE**

LEITUNGSYSTEM FÜR EIN SCR SYSTEM IN EINEM KRAFTFAHRZEUG

CONDUIT POUR UN SYSTEME SCR DANS UN VEHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2010 IT TO20100773**

(43) Date of publication of application:
**31.07.2013 Bulletin 2013/31**

(73) Proprietor: **DYTECH - Dynamic Fluid Technologies S.p.A.**
**10123 Torino (IT)**

(72) Inventors:
• **COSTANZO, Pietro**
**I-10123 Torino (IT)**

• **PEZZETTI, Christian**
**I-10123 Torino (IT)**
• **ZANARDI, Mariofelice**
**I-10123 Torino (IT)**

(74) Representative: **Mola, Edoardo et al**
**Studio Torta S.p.A.**
**Via Viotti, 9**
**10121 Torino (IT)**

(56) References cited:
**WO-A1-2009/095941**    **DE-U1-202008 007 392**
**US-A- 5 381 511**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a piping for an SCR circuit and to an SCR circuit comprising such a piping.

BACKGROUND ART

In order to comply with the ever more restrictive standards to limit air-pollution by exhaust gases produced by motor vehicles, an SCR ("Selective Catalytic Reduction") circuit must be used in the exhaust system of the motor vehicles, in particular for duty trucks and heavy trucks.

The SCR circuit consists in the injection of an aqueous solution containing 32.5% urea by compressed air at the inlet of the catalyser, placed at the silencer of the exhaust gases: in the catalyser the urea reacts with the nitrogen oxides contained in the exhaust gases, eliminating these oxides from the emissions in the atmosphere.

To carry out this process, the solution containing urea must be available in a tank, from which the solution can be withdrawn to be injected in the catalyser, after having been possibly mixed to the compressed air, according to times and modes defined by an electronic control unit which considers the various external parameters (temperature, humidity, etc.) and internal parameters (engine operation, number of rounds, etc.)

The solution containing urea must flow in the system for the whole range of working temperatures of the motor vehicles, i.e. for temperatures from -40°C to +80°C and for every flow rate condition (0 ÷ 5,5 lt/h).

However, the solution containing urea is functional only in a liquid phase, and its freezing temperature is equal to about -11°C. Therefore, when the vehicle remains parked at temperatures below such value, the SCR circuit must be provided with electrically heated pipes.

For this purpose, the pipes of SCR circuits are generally provided with a coiled electric resistor. In use, the solution containing urea freezes when vehicles equipped with the SCR circuit are parked at temperatures lower than -12°C: when the engine is started after parking, the pipes containing the solution containing urea are immediately heated by the flow of electric current.

A piping for a SCR circuit is normally housed at least partially in the compartment closed by the bonnet and there are normally restrictive requirements for the layout to identify the path of the tubes.

In order to meet these layout requirements, an SCR pipe must comprise at least one layer which can be configured so as to maintain a predetermined shape during the assembly and the use onboard the vehicle.

DE202008007392 shows a pipe having an external layer and an internal heated pipe that is held inside the external layer by assembly spacers and in which the solution containing urea flows. However, the document is silent on the stiffness of the external layer with respect to the internal pipe.

US-A-5381511 discloses a heatable hose where an outer layer is tightly wrapped around a pipe adducting a fluid.

DISCLOSURE OF INVENTION

The object of the present invention is to provide an SCR piping capable of meeting the above specified need and at the same time reduce the production costs and increase the efficiency of the heat transfer between the electric resistor and the solution containing urea.

The object of the present invention is achieved by means of a piping according to claim 1.

BRIEF DESCRIPTION OF THE DRAWINGS

The invention will now be described with reference to the accompanying drawings, which show non-limitative embodiments thereof, in which:

- figure 1 is a diagram of an SCR circuit for a motor vehicle;
- figure 2 diagrammatically shows a heatable piping of an SCR circuit of a motor vehicle;
- figure 3 shows a perspective view with elements removed for clarity of a detail of the heatable piping according to the present invention.

BEST MODE FOR CARRYING OUT THE INVENTION

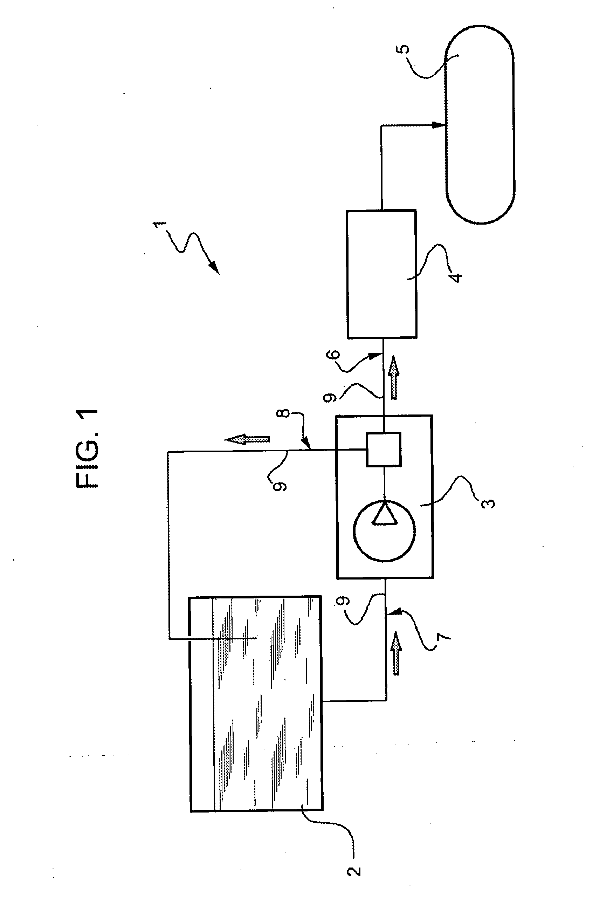

In figure 1, numeral 1 indicates an SCR circuit (diagrammatically shown) of a vehicle, comprising a tank 2 which may contain a solution containing 35% urea, a pump module 3, and a dispensing module 4, which mixes the solution containing urea with compressed air in order to send it into a catalyser 5 (diagrammatically shown) of the vehicle itself.

The pump module 3 is connected to the dispensing module 4 via a delivery line 6, and to the tank 2 via a suction line 7 and a recirculation line 8. Lines 6-8 comprise respective pipes 9, which are heatable by electric current and connected to the other components in system 1 by means of fittings.

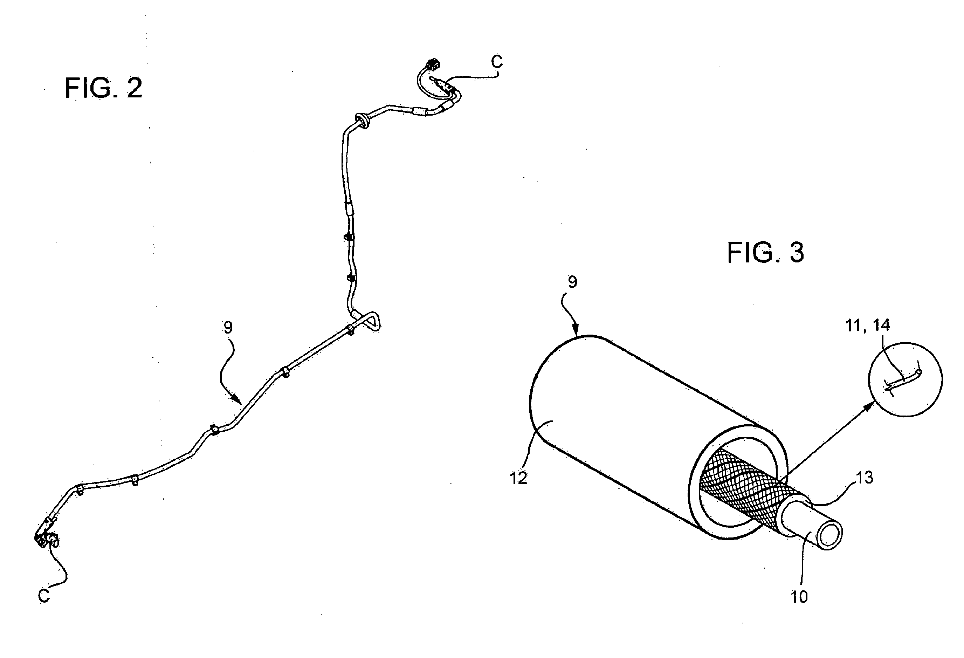

In particular, each piping 9 comprises (figure 2) at least one pipe 10 within which the solution containing urea flows, at least one electric resistor 11 arranged in contact with pipe 10 and a tubular layer 12 which houses both pipe 10 and electric resistor 11. Piping 9 also comprises a pair of connectors C, preferably quick connectors.

In particular, pipe 10 can be formed by a single layer or be multilayer. If formed by a single layer, pipe 10 is made of a polyamide material, preferably either a polyamide 12 or a polyamide 11. Alternatively, pipe 10 is multiplayer and comprises an internal layer of PA 11 or PA 12 and an external layer of a polyamide configured to be thermally conductive and electrically conductive to promote the conduction of the heat produced by the electric resistance 11. The thermal and electric conductivity are positively correlated and hereinafter the polymeric material will be identified for simplicity only with reference to the electric feature of surface resistivity. Preferably, the external layer has a surface resistivity lower than 10^6 Ohm/square; even more preferably the polymer material comprises a polyamide and even more preferably the polyamide is a PA12. For example, the polymer material is produced by UBESTA ® 3020 series. According to a preferred embodiment, the polymer material has a surface resistivity lower than 5*10^4 Ohm/square.

Pipe 10 may be surrounded by a sleeve 13. Preferably, sleeve 13 is woven and at least one of the filaments is formed by electric resistor 11. According to a preferred embodiment, apart from the electric resistor 11, the yarns of the sleeve 13 are made of an electrically insulating polymer material, for example a fluorinated elastomer. Advantageously, this elastomer comprises tetrafluoroethylene and hexafluoroethylene, the first to meet the requirements of mechanical resistance and electrical insulation and the second to improve the resistance against chemically aggressive substances, such as ammonia, the residues and/or vapours of which can be present in use.

Sleeve 13 can comprise several filaments 14, 15 of electric resistor, appropriately separated by yarns made preferably of electrically non-conductive material to avoid short-circuits with a higher degree of safety along the longitudinal direction of the sleeve. Preferably, filaments 14, 15 of electric resistor 11 are equally spaced from one another and do not cross along the longitudinal direction of the sleeve 13. Thereby, they are separated by one or more yarns of electrically insulating material parallel thereto and are crossed exclusively by electrically insulating material. Sharp bends can therefore be provided for pipe 10 and short-circuits can be avoided at the same time as the filaments are spaced. Furthermore, for a greater degree of safety for short-circuits, filaments 14, 15 of electric resistor 11 are covered by a sheath made of electrically insulating material. Advantageously, also the sheath comprises a fluorinated elastomer, preferably both tetrafluoroethylene and hexafluoroethylene.

Filaments 14, 15 can be electrically connected to respective external terminals (not shown) borne and preferably embedded at least partially in the body of connectors C. In particular, filament 14, 15 have a respective pair of input and output terminals coming out from tubular layer 12. These terminals can be in turn either connected to the electric onboard system or to a second adjacent piping 9 or to the terminals of connectors C.

Tubular layer 12 can be both formed by a single layer or be multilayer. In the case of a single layer, it is preferably made of a polyamide material, even more preferably of a polyamide 12.

During assembly, tubular layer 12 can be made so that the respective axis has a two-dimensional or three-dimensional geometry (figure 2). Parallelly, pipe 10, sleeve 13 and electric resistor 11 are made. In particular, electric resistor 11 is woven in sleeve 13 and the preassembled assembly obtained thereby is housed within tubular layer 12 which maintains its two-dimensional or three-dimensional geometry after forming both in assembled conditions and use conditions onboard the vehicle. In particular, when the preassembled assembly is inserted in tubular layer 12, the latter does not require any elastic widening or, in any case, any other operations which induce a relevant internal tensional condition of tubular layer 12. This is due to the fact that the above cited preassembled assembly is housed with radial play in tubular layer 12. The play in not necessarily constant, preferably along the longitudinal direction. Furthermore, tubular layer 12 has a flexural stiffness greater with respect to that of pipe 10. The flexural stiffness is defined as:

$$k = EI$$

wherein: E = elastic module of the material of tubular layer 12 / pipe 10
I = flexural moment of inertia of the resistant section, equal to, in the case of a circular crown section with outer diameter D and inner diameter d: $\pi*(D^4-d^4)/64$.

Preferably, the ratio between the stiffness of tubular layer 12 and of the semifinished product comprising pipe 10 and sleeve 13 is greater than 20, even more preferably greater than 30.

Finally, connectors C are applied either to pipe 10 or to tubular layer 12.

The advantages of piping 9 are the following.

Electric resistor 11 is closer to pipe 10 so that the heat is transferred more effectively. The structural function of "exoskeleton" is performed by tubular layer 12 without the latter negatively impacting with the transmission of heat between electric resistor 11 and the solution containing urea which flows in pipe 10. Preferably, tubular layer 12 is also made of thermally insulating polymer material to avoid dissipating the generated heat in the external environment.

Tubular layer 12 is made separately with respect to the preassembled assembly defined by pipe 10 and by resistor 11. Thereby, a continuous coil of preassembled assembly can be made, from which segments can be obtained of the length appropriate for the assembly in the relative tubular layers 12.

The radial play between tubular layer 12 and the preassembled assembly is preferably variable so as to avoid assembling spacers which increase the production costs and require an additional assembly step.

Thereby, the assembly of the preassembled assembly can be performed very simply, even manually, and the preassembled assembly is floating within tubular layer 12 after assembly.

Furthermore, tubular layer 12 requires a step of forming, for example oven, autoclave or steam forming. This forming step is poorly compatible with the integrity of the electrical contacts of electric resistor 11 especially because it can be performed in the presence of water/steam. By the present invention electric resistor 11 can be assembled in tubular layer 12 in dry and/or cold conditions after the forming process of layer 12 has been performed, it allows to better preserve electric resistor 11 and to increase its reliability. Subsequently, all electric connections are closed and tubular layer 12 is sealed on connectors C.

It is finally apparent that piping 9 disclosed and shown herein may be modified or varied without departing from the scope of protection as specified in the appended claims.

Electrical resistor 11 can be applied in other ways to pipe 10 without necessarily being woven to form sleeve 13.

When a high heating level is required, the number of electrical filaments 14, 15 increases. In order to maintain sleeve 13 symmetrical, these yarns can also be woven. Electrical short-circuit is avoided because each electrical filament is covered by a sheath made of electrically insulating material.

Claims

1. A piping for an SCR circuit of a motor vehicle comprising a pipe (10) to feed a solution containing urea, an electrical resistor (11) surrounding said pipe (10) to heat the solution containing urea, and a layer (12) of a material having a flexural stiffness higher than that of said pipe (10), said layer (12) is tubular, preformed and houses with radial play said electrical resistor (11) and said pipe (10), **characterized in that** said radial play is not constant so as to avoid assembling spacers.

2. The piping according to claim 1, **characterised in that** the ratio between the flexural stiffness of said layer (12) and that of the unit comprising said pipe (10) and said electrical resistor (11) is greater than 20.

3. The piping according to any of the preceding claims, **characterised in that** an axis of said layer (12) tends to maintain a two-dimensional or three-dimensional path after it has been preformed.

4. The piping according to any of the preceding claims, **characterised by** comprising a first and a second connector (C) comprising a body and respective electrical terminals at least partially embedded in the body, said terminals being electrically connected to said electrical resistor (11).

5. The piping according to any of the preceding claims, **characterised in that** said pipe (10) is multilayer and comprises an external layer of an electrically and thermically conductive polymeric material having a surface resistivity lower than 10^6 Ohm/square.

6. The piping according to any of claims 1 to 4, **characterised in that** said pipe (10) is formed by a single layer made of a polyamide material.

7. The piping according to claim 7, **characterised in that** said layer (12) is a single layer made of a PA12.

8. The piping according to any of the preceding claims, **characterised in that** said electrical resistor (11) comprises at least one filament (14; 15) of an electrically conductive material and a plurality of yarns made of an electrically insulating material woven with said at least one filament (14; 15).

9. The piping according to claim 8, **characterised in that** said at least one filament (14; 15) is covered with a sheath made of an electrically insulating material.

10. A method for manufacturing a piping according to any of the preceding claims, comprising the following steps:

    - preforming said tubular layer (12);
    - producing a preassembled assembly comprising said pipe (10) and said electrical resistor (11);
    - inserting with a not constant radial play said preassembled assembly in said tubular layer (12) after said layer (12) has been preformed so as to avoid assembly spacers.

11. The method according to claim 10, **characterised in that**, after said step of inserting, said preassembled assembly (10, 11) is floating within said layer (12).

Patentansprüche

1. Leitungssystem für ein SCR-System in einem Kraftfahrzeug, umfassend eine Leitung (10) zum Zuführen einer Urea-enthaltenden Lösung, einen elektrischen Widerstand (11), der die Leitung (10) umgibt um die Urea-enthaltende Lösung zu erwärmen, und eine Lage (12) aus einem Material mit einer Biegesteifigkeit die höher ist als die der Leitung (10), wobei die Lage (12) tubusartig, vorgeformt ist und den elektrischen Widerstand (11) und die Leitung (10) mit radialem Spiel aufnimmt, **dadurch gekennzeichnet, dass** das radiale Spiel nicht konstant ist zum Zwecke der Vermeidung von Montageabstandselementen.

2. Leitungssystem nach Anspruch 1, **dadurch gekennzeichnet, dass** das Verhältnis zwischen der Biegesteifigkeit der Lage (12) und jener der die Leitung (10) und den elektrischen Widerstand (11) enthaltenden Einheit größer als 20 ist.

3. Leitungssystem nach einem der vorangegangenen Ansprüche, **dadurch gekennzeichnet, dass** eine Achse der Lage (12) dazu neigt einen zweidimensionalen oder dreidimensionalen Pfad beizubehalten nach dem sie vorgeformt wurden.

4. Leitungssystem nach einem der vorangegangenen Ansprüche, **dadurch gekennzeichnet, dass** es einen ersten und einen zweiten Verbinder (C) umfasst, umfassend einen Körper sowie jeweilige elektrische Anschlüsse, zumindest teilweise in dem Körper eingebettet, wobei die Anschlüsse elektrisch mit dem elektrischen Widerstand (11) verbunden sind.

5. Leistungssystem nach einem der vorangegangenen Ansprüche, **dadurch gekennzeichnet, dass** das Leitung (10) mehrlagig ist und eine Außenlage aus einem elektrisch und thermisch leitfähigem Polymermaterial mit einem Flächenwiderstandswert von weniger als 10^6 Ohm/Quadrat enthält.

6. Leitungssystem nach einem der Ansprüche 1 bis 4 **dadurch gekennzeichnet, dass** die Leitung (10) einlagig aus einem Polyamidmaterial gebildet ist.

7. Leitungssystem nach Anspruch 7, **dadurch gekennzeichnet, dass** die Lage (12) einlagig aus PA12 hergestellt ist.

8. Leitungssystem nach einem der vorangegangenen Ansprüche, **dadurch gekennzeichnet, dass** der elektrische Widerstand (11) zumindest ein Filament (14; 15) eines elektrisch leitfähigen Materials enthält, sowie eine Vielzahl von Garnen oder Fäden, hergestellt aus einem elektrisch isolierenden Material, verwoben mit dem zumindest einem Filament (14; 15).

9. Leitungssystem nach Anspruch 8, **dadurch gekennzeichnet, dass** das zumindest eine Filament (14; 15) mit einer Ummantelung bedeckt ist, hergestellt aus einem elektrisch isolierenden Material.

10. Verfahren zur Herstellung eines Leitungssystems nach einem der vorangegangenen Ansprüche, umfassend die folgenden Schritte:

- Vorformen der tubusartigen Lage (12);
- Herstellen einer vormontierten Anordnung, umfassend die Leitung (10) und den elektrischen Widerstand (11);
- Einführen mit einem nicht konstanten radialen Spiel der vormontierten Anordnung in die rohrförmige oder tubusartige Lage (12), nachdem die Lage (12) vorgefertigt oder vorgeformt wurde zum Zwecke der Vermeidung von Montageabstandshaltern.

11. Verfahren nach Anspruch 10, **dadurch gekennzeichnet, dass** nach dem Schritt des Einführens die vormontierte Anordnung (10, 11) in der Lage (12) schwimmt.

## Revendications

1. Tuyauterie pour un circuit de réduction catalytique sélective (SCR) d'un véhicule à moteur, comprenant un tuyau (10) servant à amener une solution contenant de l'urée, une résistance électrique (11) qui entoure le tuyau (10) pour chauffer la solution contenant de l'urée, et une couche (12) d'une matière ayant une rigidité en flexion supérieure à celle dudit tuyau (10), la couche (12) étant tubulaire, préformée et renfermant avec un jeu radial ladite résistance électrique (11) et ledit tuyau (10), **caractérisée en ce que** ledit jeu radial n'est pas constant afin d'éviter des entretoises de montage.

2. Tuyauterie selon la revendication 1, **caractérisée en ce que** le rapport entre la rigidité en flexion de ladite couche (12) et celle de l'unité comprenant ledit tuyau (10) et ladite résistance électrique (11) est supérieur à 20.

3. Tuyauterie selon l'une quelconque des revendications précédentes, **caractérisée en ce qu'**un axe de ladite couche (12) tend à conserver un parcours bidimensionnel ou tridimensionnel après avoir été préformé.

4. Tuyauterie selon l'une quelconque des revendications précédentes, **caractérisée en ce qu'**elle comprend un premier et un deuxième connecteur (C) comprenant un corps et des bornes électriques respectives au moins partiellement encastrées dans le corps, lesdites bornes étant connectées électriquement à ladite résistance électrique (11).

5. Tuyauterie selon l'une quelconque des revendications précédentes, **caractérisée en ce que** ledit tuyau (10) est multicouche et comprend une couche extérieure constituée d'un matériau polymère électriquement et thermiquement conducteur ayant une résistivité de surface inférieure à 10^6 ohms/carré.

**6.** Tuyauterie selon l'une quelconque des revendications 1 à 4, **caractérisée en ce que** ledit tuyau (10) est formé d'une seule couche constituée d'un matériau polyamide.

**7.** Tuyauterie selon la revendication 7, **caractérisée en ce que** ladite couche (12) est une seule couche constituée de PA12.

**8.** Tuyauterie selon l'une quelconque des revendications précédentes, **caractérisée en ce que** ladite résistance électrique (11) comprend au moins un filament (14 ; 15) constitué d'un matériau électriquement conducteur et une pluralité de fils constitués d'un matériau électriquement isolant tissés avec ledit au moins un filament (14 ; 15).

**9.** Tuyauterie selon la revendication 8, **caractérisée en ce que** ledit au moins un filament (14 ; 15) est recouvert d'une gaine constituée d'un matériau électriquement isolant.

**10.** Procédé de fabrication d'une tuyauterie selon l'une quelconque des revendications précédentes, comprenant les étapes suivantes consistant à :

    - préformer ladite couche tubulaire (12) ;
    - produire un ensemble préassemblé comprenant ledit tuyau (10) et ladite résistance électrique (11) ;
    - insérer avec un jeu radial non constant ledit ensemble préassemblé dans ladite couche tubulaire (12) après que ladite couche (12) a été préformée afin d'éviter des entretoises de montage.

**11.** Procédé selon la revendication 10, **caractérisé en ce que**, après l'étape consistant à insérer, ledit ensemble préassemblé (10, 11) flotte à l'intérieur de ladite couche (12).

FIG. 1

FIG. 3

FIG. 2

**EP 2 619 495 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 202008007392
- US 5381511 A